# EUROPEAN PATENT SPECIFICATION

(11) **EP 3 498 073 B1**
(45) Date of publication and mention of the grant of the patent: **03.02.2021**
(21) Application number: 18211521.2
(22) Date of filing: 11.12.2018
(51) Int. Cl.: A01D 34/82, B62B 5/06

(54) **LAWNMOWER WITH QUICK BLOCKING/RELEASING CENTRAL JUNCTION FOR A HANDLE**
RASENMÄHER MIT ZENTRALER VERBINDUNG FÜR EINEN GRIFF MIT SCHNELLER BLOCKIERUNG/LÖSUNG
TONDEUSE À GAZON COMPORTANT UNE JONCTION CENTRALE AVEC BLOCAGE/DÉBLOCAGE RAPIDE POUR UNE POIGNÉE

(30) Priority: 18.12.2017 IT 201700145937
(43) Date of publication of application: 19.06.2019
(73) Proprietor: Stiga S.p.A. in breve anche St. S.p.A., 31033 Castelfranco Veneto (TV) (IT)
(72) Inventor: ZONTA, Paolo, 31033 Castelfranco Veneto (TV) (IT); D'AGOSTINI, Mauro, 35018 San Martino di Lupari (PD) (IT)
(74) Representative: Mittler, Andrea

(56) References cited:
- GB-A- 2 481 107
- US-A- 6 101 678
- US-A1- 2008 078 156
- US-A1- 2014 290 006

## Description

The present invention relates to a lawnmower with quick blocking/releasing central junction for a handle.

The now widespread use of a push or traction lawnmower makes it necessary to adjust the height of the handle to adapt it to the needs of the user.

It is also important to be able to limit the volume of the lawnmower when in packing or storing position, the handle generally being the element which increases space-related problems.

GB-2481107 describes a lawnmower with a handle that can be variably tilted into a substantially infinite number of positions, among which a packing or storing position in which the handle is completely tilted forwards, almost resting on the frame of the lawnmower.

Said handle has two sections which join in a common horizontal handgrip; each of said sections is associated to the lawnmower frame with a respective junction.

Said junction has a first fixed toothed gear associated with the frame, a second rotatable toothed gear associated with the section, and a third toothed gear of a blocking element.

A cam-shaped lever allows blocking/releasing of the handle.

The first and the second toothed gears are able to be engaged in different positions, on top of each other with respect to a vertical plane.

The third gear is able to simultaneously engage said first and second gear frontally by moving in horizontal direction due to the action of the lever which engages a pin able to cross said toothed gears.

Disadvantageously, the use of toothed gears may induce an unsynchronized tightening on both junctions: accordingly, the handle remains crooked, that is tilted to the right or to the left.

Moreover, the handle may be blocked in positions in which the working conditions are not safe.

Disadvantageously, the lawnmower described in GB-2481107 further comprises two blocking/releasing junctions for respective tubular elements of the handle able to converge into the same handgrip.

US-20080078156A1 discloses a lawnmower comprising a frame and a handle connected to the frame by a junction.

It is the object of the present invention to make a lawnmower which comprises a handle which can be adjusted in different working positions in which the operator may safely operate.

A further object of the present invention is that said positions are easily repeatable.

It is an even further object of the present invention that said handle is always kept straight, so as to always ensure a horizontal handgrip.

According to the invention, said and further objects are achieved with a lawnmower as defined in claim 1.

Advantageously, the claimed junction allows to select a plurality of working positions, considered to be safe according to legislation, and a packing or storing position.

The handle may be blocked only in safe working positions determined by an angular range established in the design step.

The bushing remains in any case coupled to the arms while allowing the rotation of the body (and therefore of the handle) between said arms.

Advantageously, the lawnmower includes a single junction for the handle.

These and other features of the present invention will become more apparent from the following detailed description of a practical example embodiment thereof, shown by way of non-limitative example in the accompanying drawings, in which:

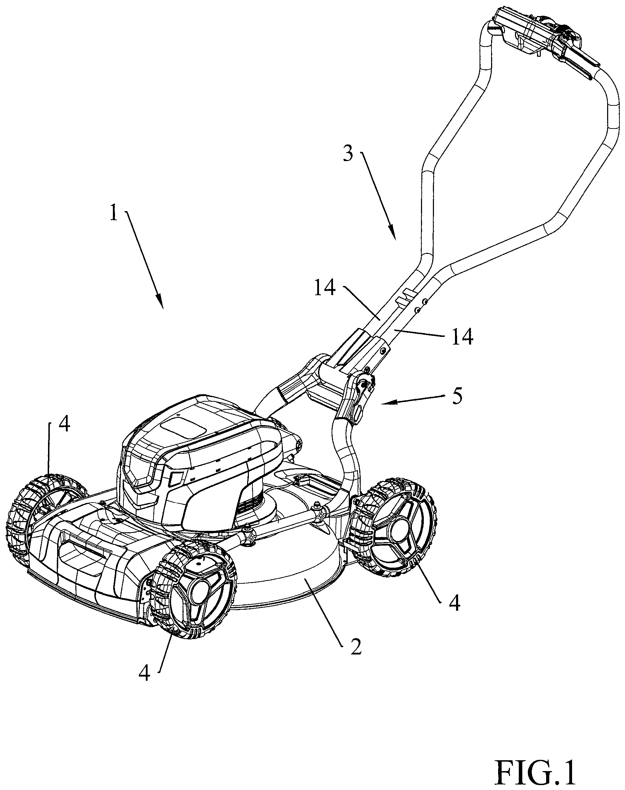

figure 1 shows a perspective view of a lawnmower according to the present invention;

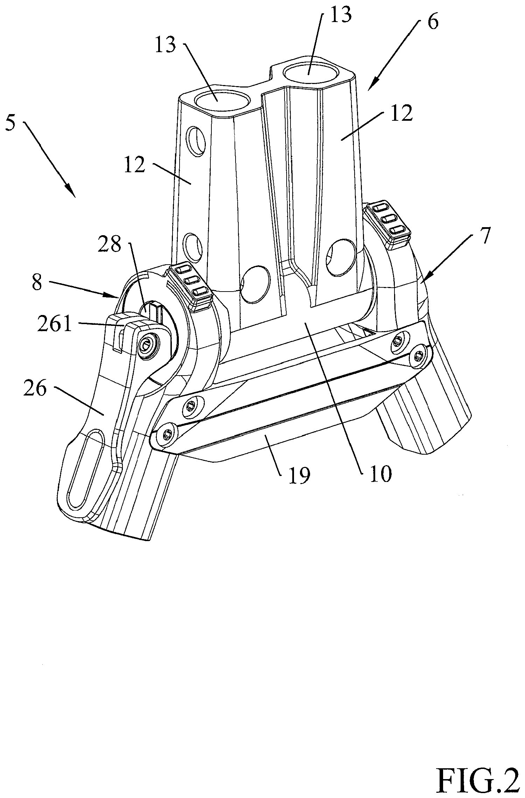

figure 2 shows a perspective view of a junction of the lawnmower;

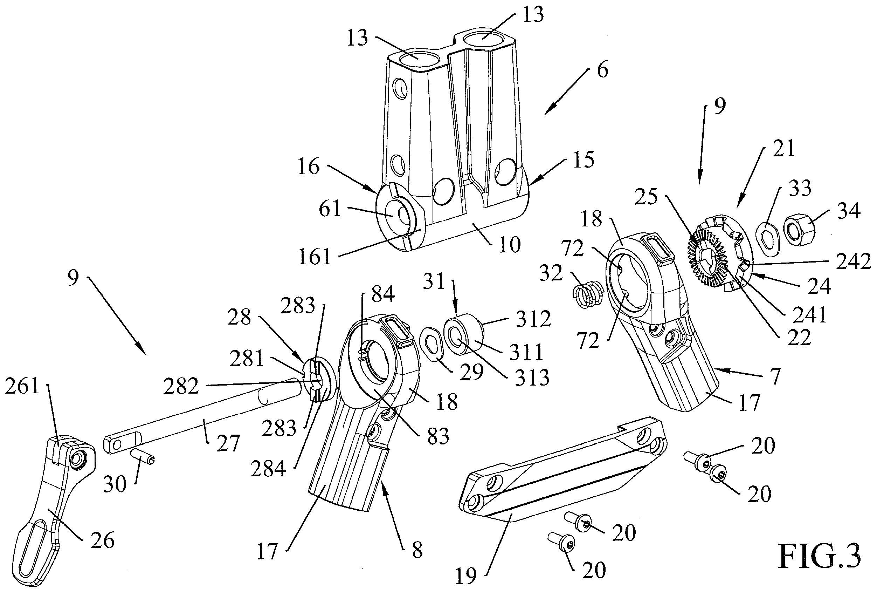

figure 3 shows an exploded perspective view of the junction;

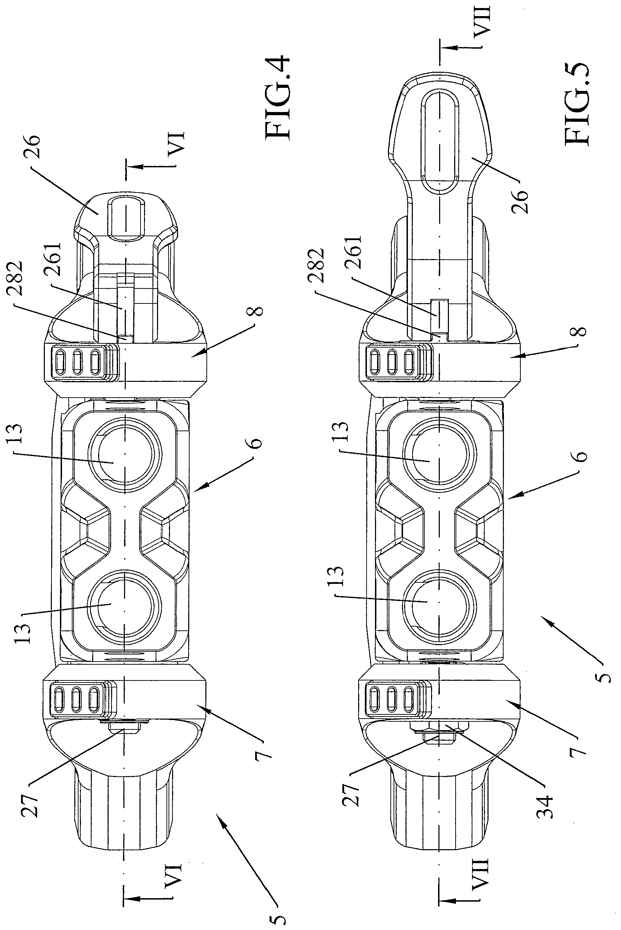

figure 4 shows a top plan view of the junction in blocking position;
figure 5 shows a top plan view of the junction in releasing position;
figure 6 shows a sectional view according to line VI-VI of figure 4;
figure 7 shows a sectional view according to line VII-VII of figure 5;
figure 8 shows an enlarged sectional view of circle A of figure 6;
figure 9 shows an enlarged sectional view of circle B of figure 6;
figure 10 shows an enlarged sectional view of circle C of figure 7;
figure 11 shows an enlarged sectional view of circle D of figure 7;
figure 12 shows a perspective view of a first arm of the junction;
figure 13 shows a front view of the arm of figure 12;
figure 14 shows a side view of the arm of figure 12;
figure 15 shows a rear view of the arm of figure 12;
figure 16 shows a perspective view of a second arm of the junction;
figure 17 shows a front view of the arm of figure 16;
figure 18 shows a side view of the arm of figure 16;
figure 19 shows a rear view of the arm of figure 16;
figure 20 shows a front view of a body of the junction;
figure 21 shows a rear view of the body of figure 20;
figure 22 shows a top plan view of the body of figure 20;
figure 23 shows a side view of the body of figure 20;
figure 24 shows a perspective view of a bushing of the junction;
figure 25 shows a front view of the bushing of figure 24;
figure 26 shows a side view of the bushing of figure 24;
figure 27 shows a rear view of the bushing of figure 24;
figure 28 shows an exploded perspective view of the junction similar to the one in figure 3, but from the opposite side.

A lawnmower 1 comprises a frame 2, four wheels 4 and a handle 3 connected to said frame 2 by a junction 5.

The junction 5 comprises a body 6 to which handle 3 is fastened, two arms 7, 8 fastened to frame 2 and means 9 for blocking/releasing the movement of the body 6 with respect to said arms 7, 8, that is of the movement of handle 3 with respect to the frame 2.

The body 6 comprises a horizontal cylindrical element 10 provided with a through cavity 11, and two fastening elements 12 in one piece, each comprising cylindrical seats 13 for tubular elements 14 of the handle 3.

The axes of said cylindrical seats 13 are orthogonal to an axis O of said cavity 11.

Said cylindrical element 10 includes a first end 15 and a second end 16.

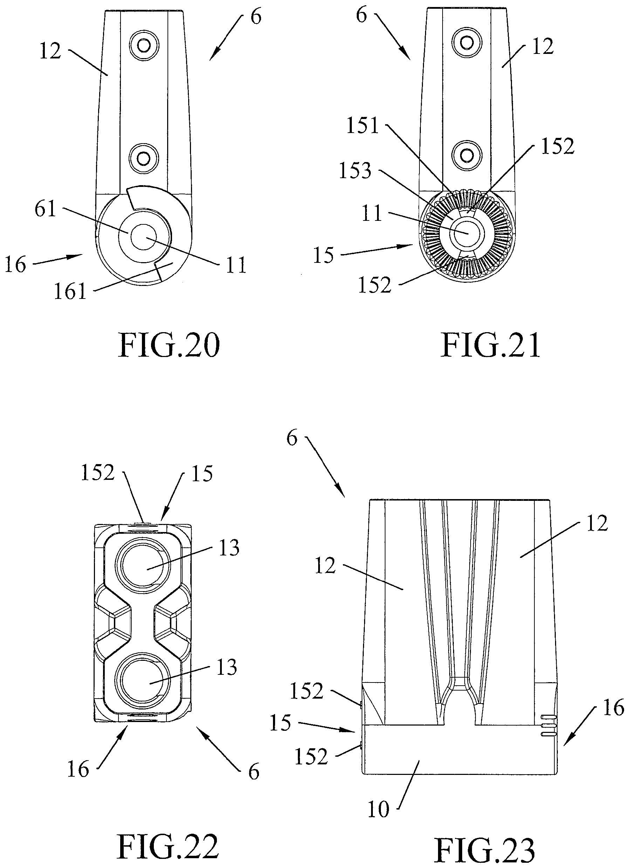

The first end 15 (figure 21) comprises a toothed gear 151 and two protrusions 152 which develop in the direction of axis O by 180° with respect to each other in the circle drawn by said toothed gear 151.

The end of said protrusions 152 only slightly protrudes with respect to the toothed gear 151, considering axis O as inner reference (figure 23).

The protrusions 152 develop from an edge 153 of cavity 11 at said first end 15. Said edge 153 is inner with respect to the toothed gear 151.

The second end 16 has a semi-circular loop 161 about a conical seat 61 which faces into cavity 11 at said second end 16.

Each arm 7, 8 comprises an inferiorly elongated body 17 able to be fastened to the frame 2 of lawnmower 1, and an annular portion 18 which surmounts said body 17.

The two arms 7, 8 are integral with each other not only by the frame 2 but also by a transverse plate 19 fastened with screws 20 at its ends to the bodies 17 of the arms 7, 8.

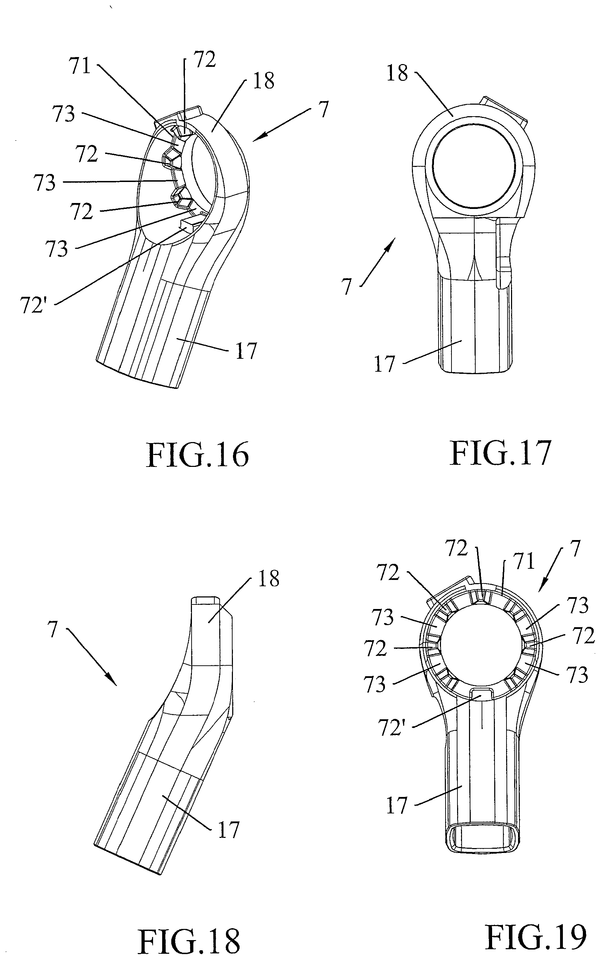

The annular portion 18 of the arm 7 (figures 16 to 19) comprises an edge 71 from which protrusions 72 develop in the direction of axis O, outwards with respect to the space between said annular portions 18 occupied by the cylindrical element 10 of the body 6, as will become clearer later.

Recesses 73 are identified between consecutive protrusions 72.

Said protrusions 72 comprise a lower protrusion 72', the function of which is clarified later.

Said lower protrusion 72' is longer with respect to the remaining protrusions, in the direction of axis O, that is the axis passing through the annular portion 18.

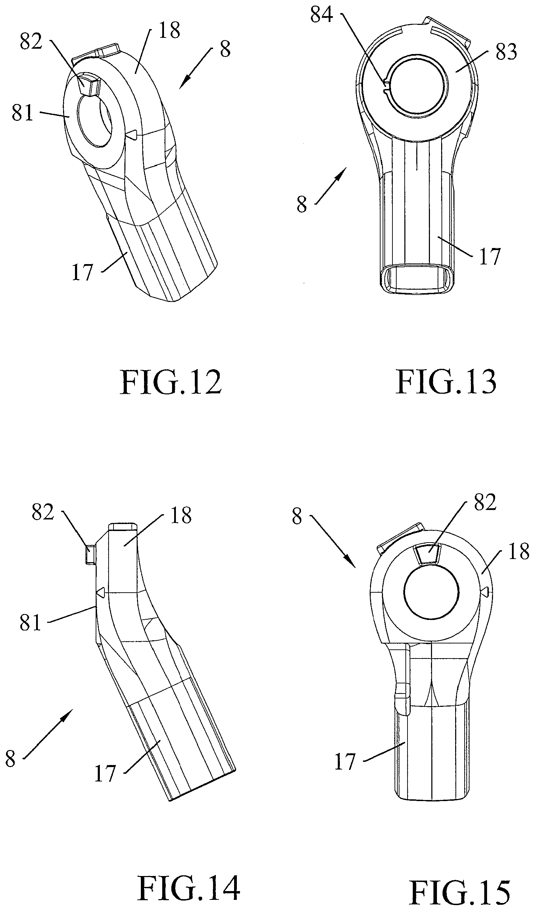

The annular portion 18 of the arm 8 (figures 12 to 15) comprises an inner edge 81 from which a protrusion 82 develops in direction of axis O and towards the inside of the space between said annular portions 18.

The annular portion 18 of the arm 8 also comprises an outer edge 83 with a guide 84.

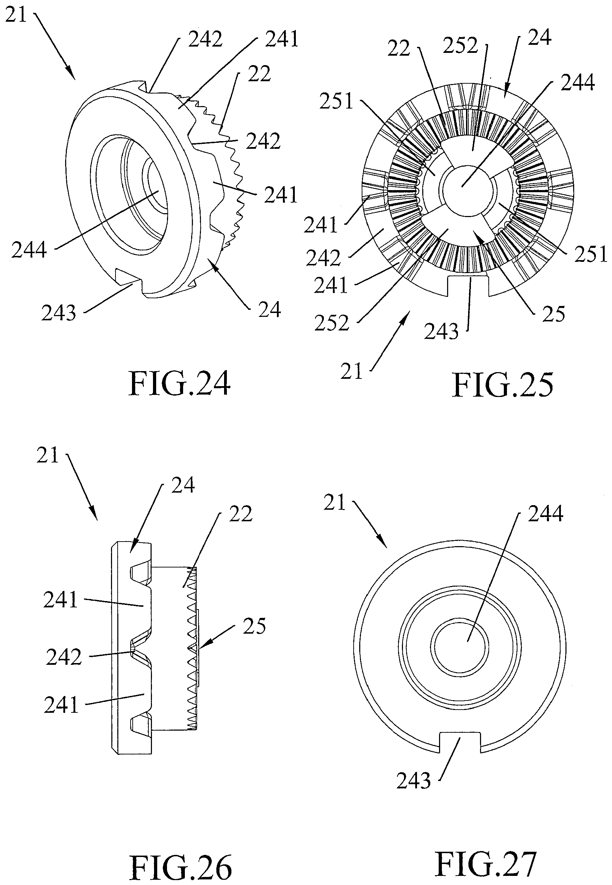

The junction 5 is further provided with a bushing 21 (figures 24 to 27) comprising a toothed gear 22 between an inner gear 25 and an outer gear 24, and a central through cavity 244.

The outer gear 24 has an alternating series of protrusions 241 and recesses 242, and a slit 243.

The inner gear 25 includes two curved protrusions 251 between which two curved recesses 252 are identified.

The gears 22, 24 and 25 face on the same side as bushing 21 according to different plans.

The blocking/releasing means 9 further comprise a lever 26 with a cam profile, a bar 27 able to cross the annular portions 18, the cavity 11 of the body 6 and the bushing 21, a disk 28, a Belleville spring 29 and a sliding bushing 31.

The lever 26 is rotatably associated with the bar 27 by a pin 30.

The disk 28 comprises a lateral recess 281, a central through hole 282 able to be crossed by the bar 27, and two protrusions 283 developing from a flat edge 284 in the direction of axis O and towards the lever 26, as will become clearer later.

The sliding bushing 31 includes a cylindrical portion 311 and a conical portion 312, both crossed by a through hole 313 able to be crossed by the bar 27.

A helical spring 32, a second Belleville spring 33 and a closing nut 34 able to tighten on a threaded end of the bar 27, complete the blocking/releasing means 9.

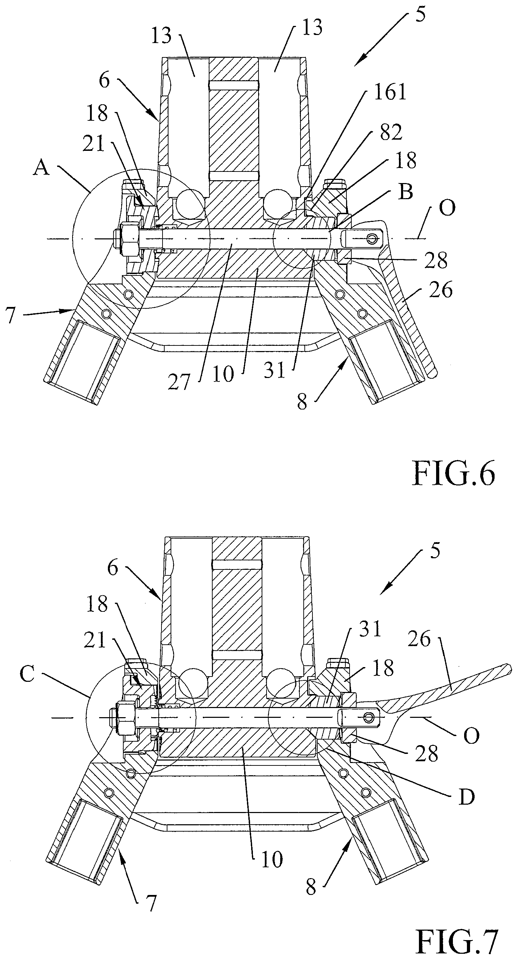

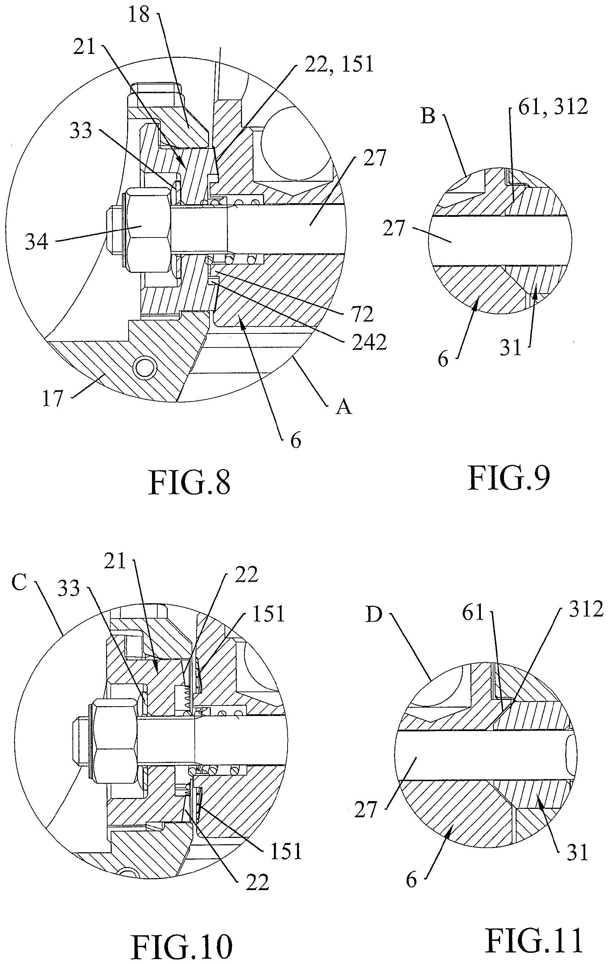

Operatively, when junction 5 is in blocking position, that is working position (figures 6, 8, 9), the lever 26 is lowered, thus pulling the bar 27 to the right (looking at said figures 6, 8, 9).

The bushing 21 is engaged in said blocking position both with the arm 7 and with the body 6.

The engagement between the bushing 21 and the body 6 occurs by the toothed gear 22 of the bushing 21 which couples with the toothed gear 151 of the body 6. The protrusions 152 of the body 6 are stationary inside the respective curved recesses 252.

The handle 3 may take on various working positions but always within a given angular range defined by the width of said curved recesses 252.

The handle 3 may not be blocked outside said range.

Advantageously, the handle 3 may be blocked only in safe working positions determined by said angular range.

The arm 7 is coupled to the bushing 21 by the engagement of the outer gear 24 of the bushing 21 with the protrusions 72 of the annular portion 18 of the arm 7.

In particular, said protrusions 72 enter into the recesses 242 of the outer gear 24 of the bushing 21, and the protrusions 241 of the outer gear 24 enter into the recesses 73 of the annular portion 18 of the arm 7.

Moreover, the lower protrusion 72' is coupled with the slit 243.

It is worth noting that said outer gear 24 is engaged with the annular portion 18 of the arm 7 both in blocking and releasing position.

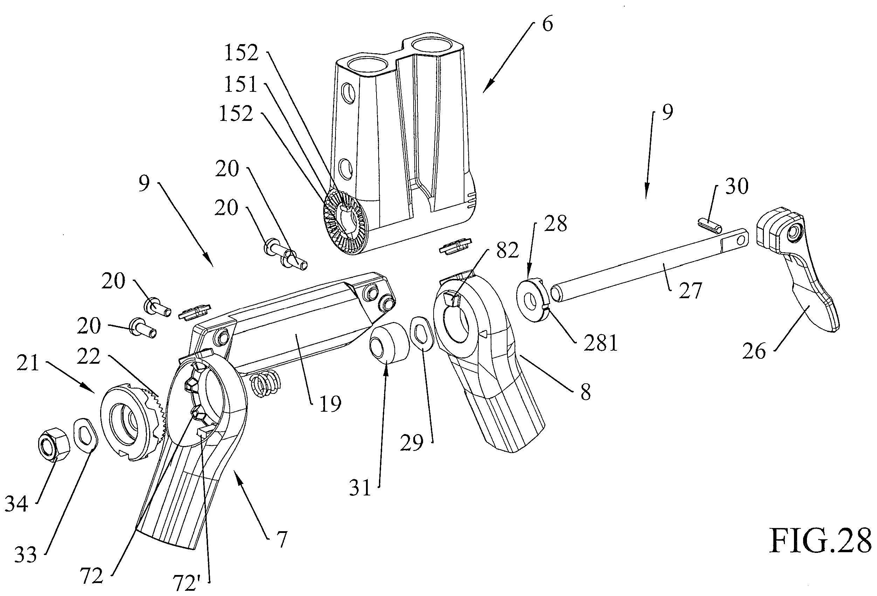

In blocking position, the bushing 31 engages the body 6, pushed by the Belleville spring 29 in turn pushed by the cam profile of the lever 26 (figure 28).

The engagement of the toothed gear 22 with the toothed gear 151 is promoted by the nut 34, which is integral with the bar 27, which pushes on the Belleville spring 33, which in turn pushes the bushing 21 against the arm 7.

Moreover, in blocking position, protrusion 82 is housed in the loop 161 of the second end 16 of the cylindrical element 10 of the body 6.

The angular width of said loop 161 determines the limit positions that handle 3 can take on also in releasing position.

The disk 28 couples with the arm 8 so that the lateral recess 281 engages with the guide 84 of the annular portion 18 of the arm 8: the disk 28 may not rotate about axis O.

Accordingly, the protrusions 283 are fastened ready to couple with a groove 261 of the lever 26, which thus always remains aligned with the arms 7, 8, both in blocking and releasing position.

When the junction 5 is in releasing position, the operator may rotate the handle 3.

The release occurs because by rotating the lever 26 upwards (figures 7, 10, 11), the bar 27 moves to the left, the bushing 31 uncouples from the conical seat 61 of the body 6 and above all, the toothed gear 22 of the bushing 21 uncouples from the toothed gear 151 of the body 6, due also to spring 32.

Advantageously, the bushing 21 in any case remains coupled to the arms 7, 8, while allowing the rotation of the body 6 (and therefore of the handle 3) between said arms 7, 8.

As anticipated above, the junction 5 may be blocked again only in the angular range in which the protrusions 152 of the body 6 may rotate in the recesses 252: the safety of use of lawnmower 1 with the handle 3 blocked is therefore ensured.

The handle 3 may also take on a packing (or storing) position, in which it is folded forwards with the protrusion 82 abutting on an end of the loop 161; in said packing position, the handle 3 may be blocked because the protrusions 152 enter into the opposite recesses 252 with respect to the ones occupied in the blocking and working position.

If the operator attempts to lower the lever 26 between the working and packing (or storing) positions, the toothed gear 22 does not engage the toothed gear 151 because the protrusions 152 are abutting against the protrusions 251 of the bushing 21.

Advantageously, the above-described junction 5 allows to select a plurality of working positions, considered to be safe according to legislation, and a packing or storing position.

Said packing or working position does not provide resting the handle 3 on the frame 2 of lawnmower 1; the maximum angular difference is fixed by the angular width of the loop 161.

A further advantage consists of the constant alignment of the lever 26 with the arms 7, 8, and therefore with respect to frame 2, regardless of the position of the handle 3.

Finally, the junction 5 allows the handle 3 to be controlled with a single lever 26, the handle 3 being provided with two tubular portions 14 which converge into the same junction 5: the problems of horizontality of the handgrip are therefore completely solved.

## Claims

1. A lawnmower (1) comprising a frame (2), wheels (4) and a handle (3) connected to said frame (2) by a junction (5), wherein the junction (5) comprises a body (6) to which the handle (3) is fastened,
the body (6) comprises a cylindrical element (10) provided with a through cavity (11) with a horizontal axis (O), and at least one fastening element (12) of the handle (3), said cylindrical element (10) includes a first end (15) and a second end (16),
**characterized in that**
the body (6) comprises two arms (7, 8) fastened to the frame (2) and means (9) for blocking/releasing the movement of the body (6) with respect to said arms (7, 8), the body (6) comprising said cylindrical element (10) and said at least one fastening element (12) of the handle (3) in one piece,
the first end (15) comprises a toothed gear (151) and at least one protrusion (152) developing in the direction of the horizontal axis (O),
each arm (7, 8) comprises a body (17) able to be fastened to the frame (2) of the lawnmower (1), and an annular portion (18) surmounting said body (17),
said ends (15, 16) of the cylindrical element (10) being rotatably associated, about the horizontal axis (O), to respective annular portions (18) of the arms (7, 8), according to a plurality of selectable blocking and releasing positions,
the annular portion (18) of a first arm (7) comprises an edge (71) from which protrusions (72) develop in the direction of the horizontal axis (O), outwards with respect to the space between said annular portions (18) occupied by the cylindrical element (10) of the body (6), recesses (73) being identified between consecutive protrusions (72),
said junction (5) further includes a bushing (21) comprising a toothed gear (22) between an inner gear (25) and an outer gear (24), and a central through cavity (244),
the outer gear (24) of the bushing (21) has an alternating series of protrusions (241) and recesses (242),
the inner gear (25) of the bushing (21) includes two curved protrusions (251) between which two curved recesses (252) are identified,
said at least one protrusion (152) of the body (6) being able to engage one of said curved recesses (252),
the blocking/releasing means (9) comprise a lever (26) with a cam profile, and a bar (27) able to cross the annular portions (18), the through cavity (11) of the body (6) and the bushing (21), said lever (26) being rotatably associated with the bar (27) between a blocking position and a releasing position,
said blocking/releasing means (9) further comprising springs (29, 32, 33) and a closing nut (34) able to be tightened on one end of the bar (27).

2. A lawnmower (1) according to claim 1, **characterized in that** the blocking/releasing means (9) comprise a sliding bushing (31) having a conical portion (312) able to engage a conical seat (61) of the second end (16) of the cylindrical element (10), said sliding bushing (31) further including a through hole (313) able to be crossed by the bar (27).

3. A lawnmower (1) according to claim 1 or 2, **characterized in that** the second end (16) of the cylindrical element (10) has a loop (161) about the through cavity (11), a protrusion (82) being engaged in said loop (161) and developing in the direction of the horizontal axis (O) and towards the inside of the space between said annular portions (18), from an inner edge (81) of the annular portion (18) of the second arm (8).

4. A lawnmower (1) according to any one of the preceding claims, **characterized in that** the annular portion (18) of the second arm (8) comprises an outer edge (83) with a guide (84), said guide (84) being able to be engaged by a lateral recess (281) of a disk (28), said disk (28) further comprising a central through hole (282) able to be crossed by the bar (27), and two protrusions (283) developing from a flat edge (284) in the direction of the horizontal axis (O) and towards the lever (26) including a groove (261) able to be engage with said protrusions (283).

5. A lawnmower (1) according to any one of the preceding claims, **characterized in that** said protrusions (72) of the first arm (7) comprise a lower protrusion (72') able to engage a slit (243) of the outer gear (24) of the bushing (21), said lower protrusion (72') being longer than the remaining protrusions (72) in the direction of the horizontal axis (O).

6. A lawnmower (1) according to any one of the preceding claims, **characterized in that** the first end (15) of the cylindrical element (10) comprises two protrusions (152) at 180° with respect to each other in the circle drawn by the toothed gear (151).

## Patentansprüche

1. Rasenmäher (1), mit einem Rahmen (2), Rädern (4) und einem Griff (3), der mit dem Rahmen (2) durch eine Verbindung (5) verbunden ist, wobei die Verbindung (5) einen Körper (6) aufweist, an dem der Griff (3) befestigt ist, wobei der Körper (6) ein zylindrisches Element (10), das mit einem Durchgangshohlraum (11) mit einer horizontalen Achse (O) versehen ist, und mindestens ein Befestigungselement (12) des Griffs (3) aufweist, wobei das zylindrische Element (10) ein erstes Ende (15) und ein zweites Ende (16) aufweist,
**dadurch gekennzeichnet,**
**dass** der Körper (6) zwei Arme (7, 8), die an dem Rahmen (2) befestigt sind, und Einrichtungen (9) zum Blockieren/Freigeben der Bewegung des Körpers (6) in Bezug auf die Arme (7, 8) aufweist, wobei der Körper (6) das zylindrische Element (10) und das mindestens eine Befestigungselement (12) des Griffs (3) in einem Stück aufweist,
**dass** das erste Ende (15) eine Verzahnung (151) und mindestens einen Vorsprung (152) aufweist, der in Richtung der horizontalen Achse (O) hervorsteht,
**dass** jeder Arm (7, 8) einen Körper (17), der an dem Rahmen (2) des Rasenmähers (1) befestigt werden kann, und einen ringförmigen Bereich (18) aufweist, der den Körper (17) überragt,
**dass** die Enden (15, 16) des zylindrischen Elements (10) jeweiligen ringförmigen Bereichen (18) der Arme (7, 8) gemäß einer Mehrzahl von wählbaren Blockier- und Freigabepositionen um die horizontale Achse (O) drehbar zugeordnet sind,
**dass** der ringförmige Bereich (18) eines ersten Arms (7) einen Rand (71) aufweist, von dem Vorsprünge (72) in Richtung der horizontalen Achse (O) nach außen in Bezug auf den Raum zwischen den ringförmigen Bereichen (18) hervorstehen, den das zylindrische Element (10) des Körpers (6) einnimmt, und wobei Vertiefungen (73) zwischen aufeinanderfolgenden Vorsprüngen (72) gebildet sind,
**dass** die Verbindung (5) ferner eine Hülse (21) beinhaltet, die eine Verzahnung (22) zwischen einer inneren Verzahnung (25) und einer äußeren Verzahnung (24) sowie einen zentralen Durchgangshohlraum (244) aufweist, dass die äußere Verzahnung (24) der Hülse (21) eine abwechselnde Reihe von Vorsprüngen (241) und Vertiefungen (242) aufweist,
**dass** die innere Verzahnung (25) der Hülse (21) zwei gekrümmte Vorsprünge (251) aufweist, zwischen denen zwei gekrümmte Vertiefungen (252) gebildet sind,
**dass** mindestens ein Vorsprung (152) des Körpers (6) in der Lage ist, in eine der gekrümmten Vertiefungen (252) einzugreifen,
**dass** die Blockier-/Freigabeeinrichtungen (9) einen Hebel (26) mit einem Steuerflächenprofil und eine Stange (27) aufweisen, die sich durch die ringförmigen Bereiche (18), den Durchgangshohlraum (11) des Körpers (6) und die Hülse (21) hindurch erstrecken kann, wobei der Hebel (26) der Stange (27) zwischen einer Blockierposition und einer Freigabeposition drehbar zugeordnet ist,
**dass** die Blockier-/Freigabeeinrichtungen ferner Federn (29, 32, 33) und eine Schließmutter (34) aufweisen, die an einem Ende der Stange (27) festgezogen werden kann.

2. Rasenmäher (1) nach Anspruch 1,
**dadurch gekennzeichnet,**
**dass** die Blockier-/Freigabeeinrichtungen (9) eine Gleithülse (31) mit einem konischen Bereich (312) aufweisen, der in einen konischen Sitz (61) des zweiten Endes (16) des zylindrischen Elements (10) eingreifen kann, wobei die Gleithülse (31) ferner ein Durchgangsloch (313) aufweist, durch das sich die Stange (27) hindurch erstrecken kann.

3. Rasenmäher (1) nach Anspruch 1 oder 2,
**dadurch gekennzeichnet,**
**dass** das zweite Ende (16) des zylindrischen Elements (10) einen Biegungsbereich (161) um den Durchgangshohlraum (11) aufweist, wobei ein Vorsprung (82) in den Biegungsbereich (161) eingreift und von einem inneren Rand (81) des ringförmigen Bereichs (18) des zweiten Arms (8) in Richtung der horizontalen Achse (O) und in Richtung zur Innenseite des Raums zwischen den ringförmigen Bereichen (18) hervorsteht.

4. Rasenmäher (1) nach einem der vorhergehenden Ansprüche,
**dadurch gekennzeichnet,**
**dass** der ringförmige Bereich (18) des zweiten Arms (8) einen äußeren Rand (83) mit einer Führung (84) aufweist, wobei mit der Führung (84) eine seitliche Vertiefung (281) einer Scheibe (28) in Eingriff treten kann, wobei die Scheibe (28) ferner ein zentrales Durchgangsloch (282), durch das sich die Stange (27) hindurch erstrecken kann, sowie zwei Vorsprünge (283) aufweist, die von einem Rand (284) in Richtung der horizontalen Achse (O) und in Richtung auf den Hebel (26) hervorstehen, der eine Nut (261) aufweist, die mit den Vorsprüngen (283) zusammenwirken kann.

5. Rasenmäher (1) nach einem der vorhergehenden Ansprüche,
**dadurch gekennzeichnet,**
**dass** die Vorsprünge (72) des ersten Arms (7) einen unteren Vorsprung (72') aufweisen, der in einen Schlitz (243) der äußeren Verzahnung (24) der Hülse (21) eingreifen kann, wobei der untere Vorsprung (72') in Richtung der horizontalen Achse (O) länger ist als die übrigen Vorsprünge (72).

6. Rasenmäher (1) nach einem der vorhergehenden Ansprüche,
**dadurch gekennzeichnet,**
**dass** das erste Ende (15) des zylindrischen Elements (10) zwei Vorsprünge (152) in einem Winkel von 180° zueinander in dem von der Verzahnung (151) beschriebenen Kreis aufweist.

## Revendications

1. Tondeuse à gazon (1) comprenant un cadre (2), des roues (4) et une poignée (3) reliée audit cadre (2) par une jonction (5), dans laquelle la jonction (5) comprend un corps (6) auquel la poignée (3) est fixée,
le corps (6) comprend un élément cylindrique (10) pourvu d'une cavité traversante (11) avec un axe horizontal (O), et au moins un élément de fixation (12) de la poignée (3), ledit élément cylindrique (10) inclut une première extrémité (15) et une seconde extrémité (16),
**caractérisée en ce que**
le corps (6) comprend deux bras (7, 8) fixés sur le cadre (2) et des moyens (9) pour bloquer/débloquer le mouvement du corps (6) par rapport auxdits bras (7, 8), le corps (6) comprenant ledit élément cylindrique (10) et ledit au moins un élément de fixation (12) de la poignée (3) en une pièce,
la première extrémité (15) comprend un engrenage denté (151) et au moins une saillie (152) se développant dans la direction de l'axe horizontal (O),
chaque bras (7, 8) comprend un corps (17) pouvant être fixé sur le cadre (2) de la tondeuse à gazon (1), et une partie annulaire (18) surmontant ledit corps (17),
lesdites extrémités (15, 16) de l'élément cylindrique (10) étant associées de façon à pouvoir tourner, autour de l'axe horizontal (O), à des parties annulaires (18) respectives des bras (7, 8), selon une pluralité de positions de blocage et de déblocage sélectionnables,
la partie annulaire (18) d'un premier bras (7) comprend un bord (71) depuis lequel des saillies (72) se développent dans la direction de l'axe horizontal (O), vers l'extérieur par rapport à l'espace entre lesdites parties annulaires (18) occupées par l'élément cylindrique (10) du corps (6), des évidements (73) étant identifiés entre des saillies consécutives (72),
ladite jonction inclut en outre une bague (21) comprenant un engrenage dentée (22) entre un engrenage intérieur (25) et un engrenage extérieur (24), et une cavité traversante centrale (244),
l'engrenage extérieur (24) de la bague (21) comporte une série alternée de saillies (241) et d'évidements (242),
l'engrenage intérieur (25) de la bague (21) inclut deux saillies courbées (251) entre lesquelles deux évidements courbés (252) sont identifiés,
ladite au moins une saillie (152) du corps (6) pouvant venir en prise avec l'un desdits évidements courbés (252),
les moyens de blocage/déblocage (9) comprennent un levier (26) avec un profil de came, et une barre (27) pouvant traverser les parties annulaires (18), la cavité traversante (11) du corps (6) et la bague (21), ledit levier (26) étant associé de façon à pouvoir tourner avec la barre (27) entre une position de blocage et une position de déblocage,
lesdits moyens de blocage/déblocage (9) comprenant en outre des ressorts (29, 32, 33) et un écrou de fermeture (34) pouvant être serré sur une extrémité de la barre (27).

2. Tondeuse à gazon (1) selon la revendication 1, **caractérisée en ce que** les moyens de blocage/déblocage (9) comprennent une bague coulissante (31) ayant une partie conique (312) pouvant venir en prise avec un siège conique (61) de la seconde extrémité (16) de l'élément cylindrique (10), ladite bague coulissante (31) incluant en outre un trou traversant (313) pouvant être traversé par la barre (27).

3. Tondeuse à gazon (1) selon la revendication 1 ou 2, **caractérisée en ce que** la seconde extrémité (16) de l'élément cylindrique (10) comporte une boucle (161) autour de la cavité traversante (11), une saillie (82) étant en prise dans ladite boucle (161) et se développant dans la direction de l'axe horizontal (O) et vers l'intérieur de l'espace entre lesdites parties annulaires (18), depuis un bord intérieur (81) de la partie annulaire (18) du second bras (8).

4. Tondeuse à gazon (1) selon l'une quelconque des revendications précédentes, **caractérisée en ce que** la partie annulaire (18) du second bras (8) comprend un bord extérieur (83) avec un guide (84), ledit guide (84) pouvant être mis en prise avec un évidement latéral (281) d'un disque (28), ledit disque (28) comprenant en outre un trou traversant central (282) pouvant être traversé par la barre (27), et deux saillies (283) se développant depuis un bord plat (284) dans la direction de l'axe horizontal (O) et vers le levier (26) incluant une rainure (261) pouvant venir en prise avec lesdites saillies (283).

5. Tondeuse à gazon (1) selon l'une quelconque des revendications précédentes, **caractérisée en ce que** lesdites saillies (72) du premier bras (7) comprennent une saillie inférieure (72') pouvant venir en prise avec une fente (243) de l'engrenage extérieur (24) de la bague (21), ladite saillie inférieure (72') étant plus longue que les saillies (72) restantes dans la direction de l'axe horizontal (O).

6. Tondeuse à gazon (1) selon l'une quelconque des revendications précédentes, **caractérisée en ce que** la première extrémité (15) de l'élément cylindrique (10) comprend deux saillies (152) à 180° l'une de l'autre dans le cercle dessiné par l'engrenage denté (151).
